# EUROPÄISCHE PATENTSCHRIFT

(11) **EP 0 548 878 B1**
(45) Veröffentlichungstag und Bekanntmachung des Hinweises auf die Patenterteilung: **06.03.1996**
(21) Anmeldenummer: 92121694.1
(22) Anmeldetag: 21.12.1992
(51) Int. Cl.: B23B 31/02, B23Q 1/70

(54) **Vorrichtung zum präzisen Verbinden von Zwei zylindrischen Bauteilen, besonders zur Herstellung zusammengesetzter Werkzeuge**
Device to precisely assemble two cylindrical members, particularly for tool holder shanks
Dispositif pour l'assemblage précis de deux pièces cylindrique, notamment pour une tige de porte-outil

(30) Priorität: 20.12.1991 IT MI913435
(43) Veröffentlichungstag der Anmeldung: 30.06.1993
(73) Patentinhaber: D'Andrea S.p.A., I-20020 Lainate (IT)
(72) Erfinder: D'Andrea, Ermanno, I-2020 Lainate (IT)
(74) Vertreter: Mayer, Hans Benno, Dipl.-Ing.

(56) Entgegenhaltungen:
- WO-A-85/03467
- DE-A- 2 234 389
- GB-A- 2 092 034
- US-A- 4 813 829

## Beschreibung

Die vorstehende Erfindung betrifft eine Vorrichtung zum praezisen Verbinden von zylindrischen Bauteilen, besonders zur Herstellung von zusammengesetzten Werkzeugen.

Mit dem Ausdruck "zusammengesetzte Werkzeuge" sind herkoemmliche, spanabhebende Werkzeuge zu verstehen, z.B. Spiralbohrer, zylindrische Fraeswerkzeuge oder Gewindeschneidwerkzeuge, die in einer Werkzeugmaschine mit einem Aufnahmekonus zu verbinden sind, der in die Spindel der Maschine eingesetzt wird.

Um zu ermoeglichen, ein und dasselbe Werkzeug fuer unterschiedliche spanabhebende Bearbeitungsvorgaenge einzusetzen, ist es haeufig notwendig, zwischen der kegelfoermig ausgebildeten Werkzeugaufnahme und dem spanabhebendenden Werkzeug ein oder mehrere Verlaengerungsstuecke vorzusehen, die aus zylindrischen Bauteilen bestehen und miteinander starr und mit hoechster Praezision zu verbinden sind.

Es ist vom Stand der Technik her bekanntgeworden, dazu ein Ende eines zylinderfoermigen Koerpers mit einem Zapfen, der von einem anderen zylinderfoermigen Koerper absteht, zu verbinden um somit eine formschluessige Verbindung herzustellen.

Um eine Verbindung des abstehenden Zapfens nach Einfuegen desselben in eine Ausnehmung des benachbarten Teiles bei bekannten Vorrichtungen durchfuehren zu koennen, erfolgt ein Verbinden der Teile unter Verwendung von Schrauben oder Gewindestiften, die quer zu den zu verbindenden zylinderfoermigen Koerpern angeordnet sind.

In einem bekannten Ausfuehrungsbeispiel ist im Inneren des Verbindungszapfens ein kleines zylinderfoermiges Bauteil vorgesehen, das konische Enden aufweist, mit denen sich Querstifte verbinden, die ebenfalls konische Endseiten aufweisen. Durch Verschrauben der beiden Querstifte wird ein Verspannen des abstehenden Zapfens, in der den Zapfen aufnehmenden Ausnehmung erreicht. Waehrend des Spannvorganges werden zwei parallel zueinander angeordnete Endflaechen der zylinderfoermigen Koerper gegeneinander verspannt, wodurch eine Werkzeugverlaengerung geschaffen wird.

Bei der bekannten Ausfuehrungsform wurde als Nachteil festgestellt, dass die stirnseitigen Beruehrungsflaechen zwischen den beiden zylindrischen Koerpern durch zwei parallel zueinander angeordnete Ebenen bestimmt sind, die senkrecht zur Laengsachse der zu verbindenden zylinderfoermigen Koerper angeordnet sind. Dies schliesst ein Verschieben der Bauteile in Querrichtung nicht aus, was zu einem Versatz der Laengsachsen zwischen den zylinderfoermigen Koerpern fuehrt.

Des weiteren wurde bei der bekannten Ausfuehrungsform festgestellt, dass der Kegelwinkel des Spannstiftes gegenueber der Laengsachse der zu verbindenden zylinderfoermigen Bauteile einen Winkel von 45° einschliesst, woraus folgt, dass die fuer den Spannvorgang der Gewindestifte aufzuwendende Kraft stets gleich der resultierenden Spannkraft ist. Beruecksichtigt man, dass die fuer den Spannvorgang aufzuwendende Kraft am Spannstift nicht beliebig vergroessert werden kann, um zu vermeiden, dass Beschaedigungen am Gewinde des Spannstiftes auftreten, so ist einleuchtend, dass die uebertragbare Spannkraft zwischen den zwei zylinderfoermigen Bauteilen begrenzt ist, auch wenn eine groessere Spannkraft die starre Verbindung zwischen den beiden zylinderfoermigen Bauteilen verbessern wuerde.

Ein weiterer Nachteile der bekannten Ausfuehrungsform ist darin zu sehen, dass bei Verschleiss des Verbindungszapfens oder dessen Aufnahme, waehrend der Erstellung der formschluessigen Verbindung ein Verschieben der zylinderfoermigen Bauteile in Querrichtung entlang den parallelen Verbindungsflaechen nicht auszuschliessen ist.

Dies fuehrt zu Ungenauigkeiten beim Bearbeitungsvorgang.

Schliesslich ist es bei der bekannten Vorrichtung notwendig, fuer den Spannvorgang zwei Gewindestifte oder Spannschrauben zu betaetigen. Dies fuehrt nicht nur zu einer Vergroesserung des baulichen Aufwandes, sondern bedingt auch eine feinfuehlige und gleichmaessige Betaetigung der beiden Spannstifte. Ferner ist es notwendig, dass beim Zusammenfuegen zwischen Zapfen und Aufnahme der beiden Bauteile die Spannteile zu entfernen sind, um nach Durchfuehrung des Zusammensetzvorganges diese erneut einzuschrauben.

Aus der DE-A-22 34 389, die als nächstliegender Stand der Technik angesehen wird, ist eine Vorrichtung zum präzisen Verbinden zweier zylindrischer Bauteile bekannt, die aus zwei zylinderförmigen Körpern besteht, von denen ein Körper eine Ausnehmung zur Aufnahme eines vom anderen zylindrischen Körper abstehenden Zapfens aufweist, und beide zylinderförmigen Bauteile unter Verwendung einer Spannvorrichtung verbunden werden, die in einer quer zur Achse der zu verbindenden Bauteile angeordneten Bohrung vorgesehen ist.

Die Stirnseite des zylindrischen Bauteils, das mit einer Ausnehmung versehen ist, ist teilweise als geneigte Fläche ausgebildet, die mit einer geneigten Fläche in Verbindung bringbar ist, die von der Grundfläche des Zapfens gebildet ist. Das Bauteil weist eine Querbohrung auf, in die eine Schraube eingesetzt ist, und das freie Ende der Schraube weist eine geneigte Umfangsfläche auf, die mit einer geneigten Umfangsfläche in Verbindung steht.

Aufgabe der vorstehenden Erfindung ist es, eine neue Verbindungsvorrichtung der genannten Art zu schaffen, mit der die Nachteile des Standes der Technik ueberwunden werden koennen, um eine wesentlich starrere Verbindung zu erzielen und jegliche Gefahr einer Querbewegung zwischen den zylinderfoermigen Bauteilen zu vermeiden, und ein selbstzentrierendes Zusammenfuegen und Verspannen zwischen den zylinderfoermigen Bauteilen zu ermoeglichen und eine axiale Verspannung mit groesstmoeglicher Kraft, bei Einsatz von einfachen und billig herstellbaren Hilfsmitteln, zu gestatten.

Diese Aufgabe wird unter Verwendung von zwei zylinderfoermigen Bauteilen dadurch geloest, dass der Zapfen eine Durchgangsbohrung aufweist, in die eine Gewindehuelse eingesetzt ist, die mit einer Zylinderkopfschraube in Wirkverbindung steht, und das freie Ende der Gewindehuelse und des Zylinderkopfes der Schraube geneigte Umfangsflaechen aufweisen, die mit geneigten Umfangsflaechen in Verbindung stehen, die die Bohrungen auf ihrer, zur Ausnehmung hin gerichteten Seite, begrenzen.

Durch diese Massnahme wird eine selbstzentrierende (geneigte Flaechen) Verbindung zwischen den zylinderfoermigen Bauteilen moeglich und durch Betaetigung der Spannteile (Schraube/Gewindehuelse) wird eine Spannkraft zwischen den zylinderfoermigen und zu verbindenden Bauteilen geschaffen.

Der Erfindungsgegenstand wird nun genauer anhand eines Ausfuehrungsbeispieles beschrieben und in den Zeichnungen dargestellt. Es zeigen:
Fig. 1 in auseinandergezogener Darstellung ein spanabhebendes Werkzeug, das in die konische Ausnehmung eines Verlaengerungsstueckes einsetzbar ist, das unter Einsatz der erfindungsgemaessen Vorrichtung mit einem Werkzeugaufnahmekonus verbindbar ist;
Fig. 2 im Schnitt die wesentlichen Teile der erfindungsgemaessen Verbindungsvorrichtung;
Fig. 3 im Schnitt entlang der Line III-III von Fig. 2 die Merkmale eines Positionierstiftes;
Fig. 4 im Schnitt entlang der Linie IV-IV von Fig. 2 die Verbindungsstelle zwischen den beiden zylinderfoermigen Bauteilen unter Darstellung der Teile Schraube/Gewindehuelse in Ruhelage;
Fig. 5 die Schnittdarstellung nach Fig. 4 mit den Bauteilen Schraube/Gewindehuelse in Spannlage; und
Fig. 6 ein weiteres Ausfuehrungsbeispiel der Verbindungsvorrichtung nach der Erfindung.

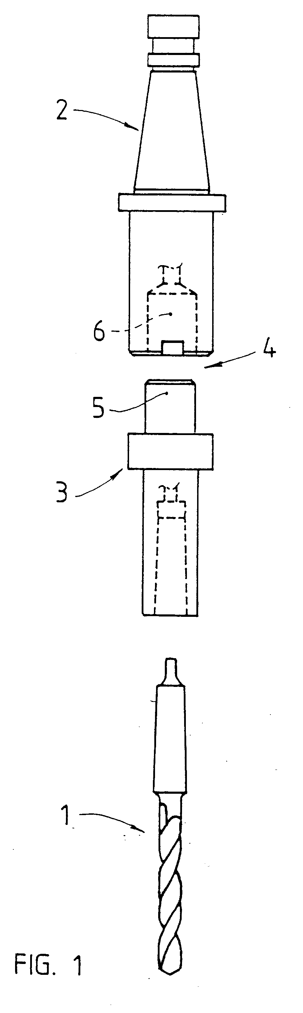

Wie der Fig. 1 zu entnehmen ist, soll ein Werkzeug 1 mit einem Aufnahmekonus 2, der in die Spindel einer Werkzeugmaschine einzusetzen ist, verbunden werden. Die Verbindung erfolgt unter Einsatz von einem oder mehreren Verlaengerungs- oder Zwischenstuecken 3. Die Verbindung, die an der mit 4 gekennzeichneten Stelle erfolgt, wird ueber ein formschluessiges Zusammenfuegen bewerkstelligt, indem an einem Teil ein abstehender Zapfen 5 vorgesehen ist, der mittels Praezisionsverbindung in eine Ausnehmung 6 des anderen Teils einzufuegen ist, um dadurch eine Praezisionsverbindung mit grosser Starrheit zu bilden.

Dieser Stand der Technik ist schematisch in Fig. 1 dargestellt.

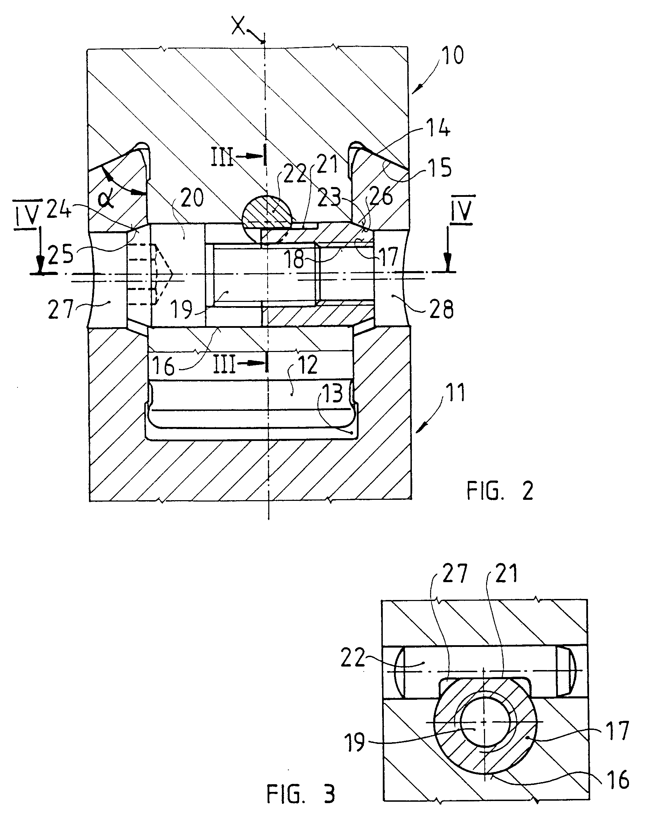

Erfindungsgemaess, wie in Fig. 2 dargestellt, ist vorgesehen, dass ein erster zylinderfoermiger Koerper 10, der mit einem zweiten zylinderfoermigen Koerper 11 zu verbinden ist, einen stirnseitig abstehenden Zapfen 12 aufweist, der mit Praezision in eine Ausnehmung 13 einfuehrbar ist, die in den zweiten zylinderfoermigen Koerper eingearbeitet ist. In vorteilhafter Weise sind Zapfen 12 und Ausnehmung 13 gehaertet und geschliffen.

Um stets eine selbstzentrierende Verbindung zwischen dem zylinderfoermigen Koerper 10 und dem zylinderfoermigen Koerper 11 zu gewaehrleisten, wird vorgeschlagen, die Flaeche 14, die am Grund des Zapfens 12 vorgesehen ist, als geneigte Flaeche auszubilden; in vorteilhafter Weise als vom Zapfen 12 in Richtung des aeusseren Umfanges des Koerpers 10 abfallenden Flaeche. Der Neigungswinkel (α), der die Wandneigung 14 festlegt, ist in vorteilhafter Weise mit 65° gewaehlt.

Entsprechend ist auch das freie Ende des zylinderfoermigen Koerpers 11 in unmittelbarer Naehe der Ausnehmung 13 ausgebildet. Hier ist eine geneigte Flaeche 15 vorgesehen.

Diese geneigte Flaeche 15 weist abschuessigen Verlauf in Richtung des Aussenumfanges des Koerpers 11 auf. In den vorspringenden Zapfen 12 ist eine Durchgangsbohrung 16 eingearbeitet, die eine Gewindehuelse 17 aufweist, die ein Innengewinde 18 aufweist, mit dem sich der Schaft 19 einer Schraube verbindet, die mit einem zylindrischen Kopf 20 versehen ist. An der Oberseite weist die Huelse 17 eine Abflachung 21 auf, die z.B. durch einen Fraesvorgang hergestellt wird. Mit dieser Abflachung steht das abgeflachte Teil eines Querstiftes 22 in Verbindung.

Dadurch wird vermieden, dass die Huelse 17 einer unerwuenschten Drehbewegung im Inneren der Durchgangsbohrung 16 ausgesetzt wird.

Wie der Fig. 2 zu entnehmen ist, weist das freie Ende der Huelse 17 eine Umfangsflaeche 23 auf, die als geneigte Flaeche ausgebildet ist; auch der zylindrische Kopf 20 weist an seinem freien Ende eine Umfangsflaeche 24 auf, die geneigt ausgebildet ist. Die geneigten Umfangsflaechen 23 und 24 sind mit geneigten Umfangsflaechen 25 und 26 verbindbar und diese geneigten Umfangsflaechen begrenzen (auf der zur Ausnehmung 13 gerichteten Seite) die durchgehenden Bohrungen 27 und 28, die in den Koerper 11 in Uebereinstimmung mit der Ausnehmung 13 eingearbeitet sind.

In vorteilhafter Weise betraegt der Winkel (β), der zwischen der Laengsachse der Schraube 20, 19 und den geneigten Umfangsflaechen 23, 24, 25 und 26 gebildet ist, ungefaehr 20°.

Dieser Winkel (β), der als sehr spitzer Winkel ausgebildet ist, hat den Vorteil (wie in einfacher Weise aus einem Kraeftediagramm entnehmbar ist) dass mit einer sehr geringen, in Axialrichtung gerichteten Antriebskraft der Schraube 19, 20, eine sehr hohe Kraftkomponente, die ueber die geneigten Flaechen 25, 26 uebertragen wird, erzeugt wird.

Dadurch wird eine hohe Spannkraft bei Aufbringen einer sehr bescheidenen Antriebskraft fuer die Spannschraube erzielt.

Wie der Fig. 2 zu entnehmen ist, ist die Durchgangsbohrung 16 des Zapfens 12 im Koerper 10 gegenueber den Bohrungen 27, 28, die in den Koerper 11 in Uebereinstimmung mit der Ausnehmung 13 eingearbeitet sind, versetzt angeordnet.

Dieser Versatz fuehrt dazu, dass die geneigten Umfangsflaechen 25 und 26 des Kopfes 20 bzw. der Gewindehuelse 17 mit den Umfangsflaechen 24 und 23 der Bohrungen 27 und 28 in Wirkverbindung treten und beim Aufweiten der Baugruppe, bestehend aus Gewindehuelse 17 und Schraube 19, eine axiale Verschiebung zwischen den zylinderfoermigen Koerpern 10, 11 hervorrufen mit dem Ergebnis, dass der Zapfen 12 in Richtung des Bodens der Ausnehmung 13 gedrueckt wird und gleichzeitig die geneigte Flaeche 14 des zylinderfoermigen Koerpers 10 mit grosser Kraft gegen die geneigte Flaeche 15 des Koerpers 11 gedrueckt wird.

Um zu vermeiden, dass waehrend der Betaetigung der Schraube 19 durch die Gewindehuelse 17 in der Durchgangsbohrung 16 eine Drehbewegung durchgefuehrt wird, ist die Gewindehuelse 17 mit einer Abflachung 21 versehen, die formschluessig mit einer Abflachung 27 eines Querstiftes 22 in Wirkverbindung steht (Fig. 3).

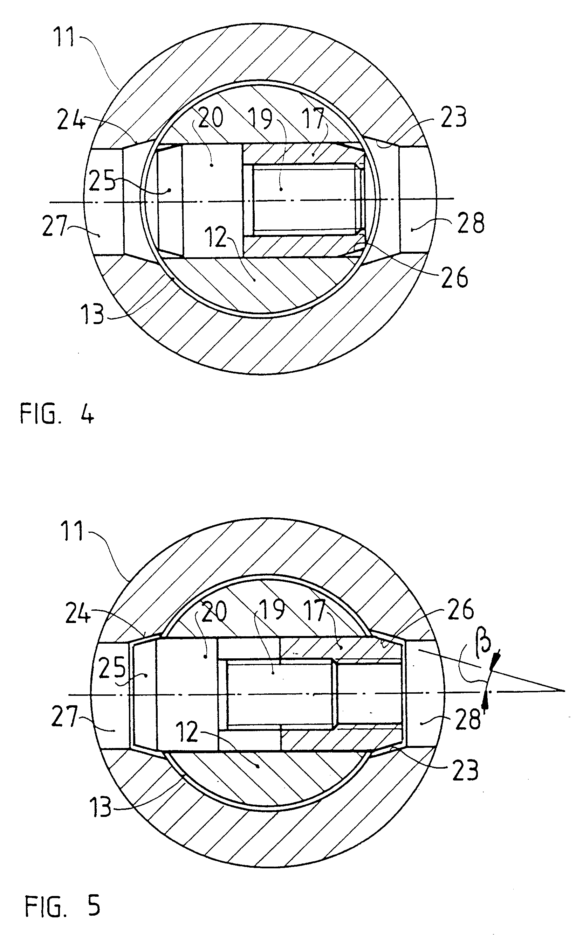

In den Fig. 4 und 5 sind Querschnittsdarstellungen gezeigt, die durch die Verbindungsstelle zwischen dem zylinderfoermigen Koerper 10 und dem zylinderfoermigen Koerper 11 gelegt sind.

Wenn der Gewindeschaft 19 der Schraube 20 vollstaendig in die Gewindehuelse 17 eingeschraubt ist, nimmt die Baugruppe, bestehend aus Schraube/Gewindehuelse 20, 17 Abmessungen an, die kleiner sind als der Durchmesser des abstehenden Zapfens 12.

Dadurch kann der Zapfen 12 ungehindert in die Ausnehmung 13 des zylinderfoermigen Koerpers 11 eingesetzt werden.

Soll ein Verspannen zwischen den beiden zylinderfoermigen Koerpern 10 und 11 erfolgen, so wird auf die einzige Schraube 20, 19 eingewirkt, um ein Auseinanderfahren zwischen dem Gewindeschaft 19 der Schraube 20 und der Gewindehuelse 17, die mit einem Innengewinde 18 versehen ist, zu bewirken. Somit faehrt die Baugruppe 20, 19, 17 in Querrichtung auseinander und das obere Teilstueck der geneigten Umfangsflaeche 26 und 24 des Kopfes 20 sowie der Gewindehuelse 17 treten mit den geneigten Umfangsflaechen 25 und 23, die die Bohrungen 27 und 28 auf ihrer Innenseite begrenzen, in Wirkverbindung. Dadurch erfolgt aufgrund einer Reaktionsbewegung ein gegenseitiges Verspannen zwischen den zylinderfoermigen Koerpern 10 und 11.

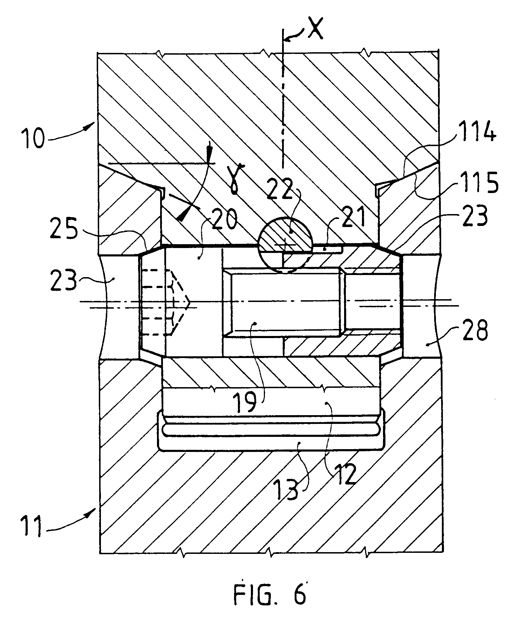

Praktische Versuche haben ergeben, dass es sich als vorteilhaft erweisen koennte, die Verbindungsvorrichtung gemaess dem in Fig. 6 dargestellten Beispiel auszubilden.

Der Fig. 6 kann entnommen werden, dass die Flaechen 114 und 115 auch mit ansteigendem Verlauf (von der Achse X des Zapfens 15 in Richtung des Aussenumfanges des Koerpers 10) verlaufen koennen. Mit anderen Worten, es ist keine hinterschnittene, geneigte Flaeche vorgesehen, sondern eine geneigte Flaeche, die von der Mitte der Vorrichtung (Achse X) zur Aussenseite der Vorrichtung ansteigt. Dieses Merkmal fuehrt zu einer wesentlichen Vereinfachung in der Fertigung der Bauteile.

Mit besonderem Vorteil ist der Winkel (γ), der zwischen den Flaechen 114 und 115 sowie einer senkrecht zur Achse (X) ausgerichteten Linie eingechlossen ist, mit ungefaehr 20° bis 25° bemessen.

## Patentansprüche

1. Vorrichtung, zum praezisen Verbinden von zwei zylindrischen Bauteilen (5, 6), besonders zur Herstellung von zusammengesetzten Werkzeugen (1, 2), bestehend aus zwei zylinderfoermigen Koerpern (10, 11), von denen ein Koerper (11) eine Ausnehmung (13) zur Aufnahme eines vom anderen zylindrischen Koerper (10) abstehenden Zapfens (12) aufweist und beide zylinderfoermigen Bauteile (10, 11) unter Verwendung einer Spannvorrichtung (17, 19, 20) verbunden werden, die in quer zur Achse (X) der zu verbindenden Bauteilen (10, 11) angeordneten Bohrungen (27, 28) vorgesehen ist, wobei die Stirnseite des zylindrischen Bauteils (11), das mit einer Ausnehmung (13) versehen ist, als geneigte Flaeche (15) ausgebildet ist, die mit einer geneigten Flaeche (14) in Verbindung bringbar ist, die von der Grundflaeche des Zapfens (12) gebildet ist, **dadurch gekennzeichnet**, dass der Zapfen (12) eine Durchgangsbohrung (16) aufweist, in die eine Gewindehuelse (17) eingesetzt ist, die mit einer Zylinderkopfschraube (19, 20) in Wirkverbindung steht, und das freie Ende der Gewindehuelse (17) und des Zylinderkopfes (20) der Schraube (19) geneigte Umfangsflaechen (23, 24) aufweisen, die mit geneigten Umfangsflaechen (25, 26) zusammenwirken, die die Bohrungen (27, 28), auf ihrer zur Ausnehmung (13) hin gerichteten Seite, begrenzen.

2. Vorrichtung, nach Patentanspruch 1, **dadurch gekennzeichnet**, dass die mit einem Gewinde (18) versehene Huelse (17) eine Abflachung (21) aufweist, die mit einer Abflachung (27) eines in den zylindrischen Koerper (10) eingesetzten Querstiftes (22) in Wirkverbindung steht.

3. Vorrichtung, nach Patentanspruch 1, **dadurch gekennzeichnet**, dass die Durchgangsbohrung (16) des Zapfens (12) des zylinderfoermigen Koerpers (10) gegenueber den Bohrungen (27, 28), die in den Koerper (11), der die Ausnehmung (13) aufnimmt, versetzt angeordnet ist.

4. Vorrichtung, nach Patentanspruch 1, **dadurch gekennzeichnet**, dass der Winkel (α) der Neigung zwischen der Wand der Ausnehmung (13) und der Flaeche (15) ungefaehr 65° entspricht.

5. Vorrichtung, nach Patentanspruch 1, **dadurch gekennzeichnet**, dass der Winkel (β) der zwischen der Schraube (19) und der geneigten Flaeche (15) der Huelse (24) des Zylinderkopfes (20) der Schraube (19) gebildet ist, ungefaehr 20° entspricht.

6. Vorrichtung, nach Patentanspruch 1, **dadurch gekennzeichnet**, dass die geneigten Flaechen (14, 15) Flaechen mit abfallendem Verlauf von der Achse (X) zum Aussenumfang der Vorrichtung aufweisen.

7. Vorrichtung, nach Patentanspruch 1, **dadurch** **gekennzeichnet**, dass die Flaechen (114, 115) steigenden Verlauf von der Achse (X) zum Aussenumfang der Vorrichtung aufweisen.

8. Vorrichtung, nach Patentanspruch 7, **dadurch gekennzeichnet**, dass der Winkel (γ), der zwischen den geneigten Flaechen (114 und 155) und einer Geraden, die senkrecht zur Achse (X) angeordnet ist, 20° - 25° entspricht.

## Claims

1. Device for precisely connecting two cylindrical components (5, 6), in particular for producing assembled tools (1, 2), consisting of two cylindrical bodies (10, 11), of which one body (11) has a recess (13) for accommodating a stem (12) projecting from the other cylindrical body (10), and both cylindrical components (10, 11) are connected by the use of a clamping device (17, 19, 20) which is provided in bores (27, 28) arranged transversely to the axis (X) of the components (10, 11) to be connected, the front end of the cylindrical component (11) provided with a recess (13) being designed as an inclined surface (15) which can be brought into connection with an inclined surface (14) which is formed by the base surface of the stem (12), characterized in that the stem (12) has a through-bore (16) into which a threaded sleeve (17) is inserted which is in operative connection with a cheese-head screw (19, 20), and the free end of the threaded sleeve (17) and of the cheese head (20) of the screw (19) have inclined peripheral surfaces (23, 24) which interact with inclined peripheral surfaces (25, 26) which define the bores (27, 28) on their side directed towards the recess (13).

2. Device according to Patent Claim 1, characterized in that the sleeve (17) provided with a thread (18) has a flat (21) which is in operative connection with a flat (27) of a transverse pin (22) inserted into the cylindrical body (10).

3. Device according to Patent Claim 1, characterized in that the through-bore (16) of the stem (12) of the cylindrical body (10) is arranged offset relative to the bores (27, 28) which are made in the body (11) which accommodates the recess (13).

4. Device according to Patent Claim 1, characterized in that the angle (α) of inclination between the wall of the recess (13) and the surface (15) corresponds to approximately 65°.

5. Device according to Patent Claim 1, characterized in that the angle (β) which is formed between the longitudinal axis of the screw (19) and the inclined surfaces (23, 24) of the sleeve (17) and the cheese head (20) of the screw (19) corresponds to approximately 20°.

6. Device according to Patent Claim 1, characterized in that the inclined surfaces (14, 15) are surfaces having a falling profile from the axis (X) to the outer periphery of the device.

7. Device according to Patent Claim 1, characterized in that the surfaces (114, 115) have a rising profile from the axis (X) to the outer periphery of the device.

8. Device according to Patent Claim 7, characterized in that the angle (γ) which is enclosed between the inclined surfaces (114 and 115) and a straight line arranged perpendicularly to the axis (X) corresponds to 20° - 25°.

## Revendications

1. Dispositif pour l'assemblage précis de deux pièces cylindriques (5, 6), notamment pour fabriquer des outils composés (1, 2) constitués de deux corps cylindriques (10, 11) dont un corps (11) présente un évidement (13) pour la réception d'un ergot (12) en saillie depuis l'autre corps cylindrique (10) et où les deux pièces cylindriques (10, 11) sont reliées en utilisant un dispositif tendeur (17, 19, 20) qui est prévu dans des perçages (27, 28) disposés transversalement à l'axe (X) des pièces (10, 11) à assembler, le côté frontal de la pièce cylindrique (11) qui est pourvu d'un évidement (13) étant réalisé sous forme de surface inclinée (15) qui peut être amenée en liaison avec une surface inclinée (14) qui est constituée par la surface de base de l'ergot (12), caractérisé en ce que l'ergot (12) présente un perçage traversant (16) dans lequel est placée une douille filetée (17) qui est en liaison active avec une vis à tête cylindrique (19, 20), et que l'extrémité libre de la douille filetée (17) et de la tête cylindrique (20) de la vis (19) présente des surfaces périphériques inclinées (23, 24) qui coopèrent avec des surfaces périphériques inclinées (25, 26) qui délimitent les perçages (27, 28) à leur côté orienté vers l'évidement (13).

2. Dispositif selon la revendication 1, caractérisé en ce que la douille (17) pourvue d'un filetage (18) présente un plat (21) qui est en liaison active avec un plat (27) d'une tige transversale (22) introduite dans le corps cylindrique (10).

3. Dispositif selon la revendication 1, caractérisé en ce que le perçage traversant (16) de l'ergot (12) du corps cylindrique (10) est disposé de façon décalée par rapport aux perçages (27, 28) qui sont ménagés dans le corps (11) qui présente l'évidement (13).

4. Dispositif selon la revendication 1, caractérisé en ce que l'angle (α) de l'inclinaison entre la paroi de l'évidement (13) et la surface (15) est environ de 65°.

5. Dispositif selon la revendication 1, caractérisé en ce que l'angle (β) qui est formé entre la vis (19) et la surface inclinée (15) de la douille (24) de la tête cylindrique (20) de la vis (19) est environ de 20°.

6. Dispositif selon la revendication 1, caractérisé en ce que les surfaces inclinées (14, 15) présentent des surfaces s'étendant suivant une inclinaison vers le bas depuis l'axe (X) au pourtour extérieur du dispositif.

7. Dispositif selon la revendication 1, caractérisé en ce que les surfaces (114, 115) s'étendent suivant une inclinaison vers le haut depuis l'axe (X) au pourtour extérieur du dispositif.

8. Dispositif selon la revendication 7, caractérisé en ce que l'angle (α) qui est formé entre les surfaces inclinées (114, 155) et une ligne droite qui est disposée perpendiculairement à l'axe (X) est de 20° - 25°.
